# EUROPEAN PATENT APPLICATION

(11) **EP 4 589 088 A1**
(43) Date of publication of application: **23.07.2025**
(21) Application number: 25151506.0
(22) Date of filing: 13.01.2025
(51) Int. Cl.: E03F 1/00, B60R 15/04, E03F 5/10, E03D 1/00

(54) **DEVICE FOR FLUSHING CASSETTES**

(30) Priority: 18.01.2024 IT 202400000885
(71) Applicant: Creative Doc S.r.l., 46034 Borgo Virgilio (MN) (IT)
(72) Inventor: MILANI, Alessandro, 46100 Mantova (IT)
(74) Representative: Lunati & Mazzoni S.r.L.

(57) **Abstract**

A flushing device (1) for cassettes is provided, comprising a first body (2) including a first interface surface (20) extending along a main plane (1b) and adapted to contact at least one wall (10a) of a cassette (10) for cassette toilets to occlude an opening (10b) arranged on the wall (10a); a through-hole (22) transverse to the main plane (1b) and adapted to establish fluid passage communication between the opening (10b) and the exterior when the device (1) is in use with the hole (22) overlapping the opening (10b); and wherein the device (1) further comprises at least one hydraulic connector (31) in fluid passage communication with the hole (22) and configured to allow stable hydraulic connection of the device (1) with a connector of the hydraulic network (100) external to the device (1).

## Description

The present invention relates to a device for flushing cassettes of the type specified in the preamble of claim 1.

In particular, the present invention concerns a device designed to enable the flushing of cassette toilets used in recreational vehicles, such as campers and caravans, which are permanently fitted to allow occupants to reside in them.

As is well known, especially among camping enthusiasts, one of the most inconvenient activities associated with recreational vehicles is the management of the cassette toilet, which often requires emptying and cleaning.

The cassette, at least in its most widespread configuration as commercialized by companies such as *Thetford*^{™} and *Dometic*^{™}, generally consists of a tank, a discharge tube sealed with a discharge cap, and a lid, specifically a removable shutter located above the tank, which can be opened or closed to allow use and cleaning of the cassette.

The cleaning operations are often performed manually at dedicated chemical toilets or specific towers available at equipped rest stops or campgrounds, or even at one's own bathroom after returning from a trip.

Specifically, these operations involve removing the cassette from its slot within the recreational vehicle's cassette toilet, opening the discharge cap, and emptying the waste externally.

Subsequently, depending on the circumstances the cassette is either placed under a faucet or laid on the ground for the insertion of a hose, preferably equipped with an appropriate nozzle, so as to fill the cassette with water for rinsing, then emptying again. This process must be repeated at least two or three times.

For convenience, the cassette can also be refilled normally through its discharge tube. However, due to the curved configuration of the hose, water introduction through it can create air bubbles that cause splashes of water which is obviously dirty, making the operation very unpleasant and unhygienic.

Furthermore, when rinsing the cassette in this manner, the main shutter must remain closed, preventing adequate cleaning of the shutter and its gasket.

Therefore, the known techniques exhibit several significant drawbacks, summarized as follows.

Due to the configuration of the cassette, cleaning and rinsing operations are unhygienic, extremely uncomfortable, and consequently only partial and ineffective.

To try and overcome the drawbacks cited above, several solutions have been adopted.

Currently solutions are available including electric macerators, such as, for example, those commercialized by *Evolutionsun*^{™}, which allow waste to be conveyed through small-diameter hoses but which require modifications to the original cassette. Naturally, these modifications must be carried out by a professional, who is also involved in adapting the recreational vehicle for the mentioned device. In any case, the primary purpose of these macerators actually is not cleaning or emptying but rather increasing the cassette's capacity by diverting waste to larger containers.

Moreover, *Thetford*^{™} has introduced into the market an automatic device that by using chemical substances neutralizes waste, making it suitable for disposal in greywater rather than blackwater.

However, this device also employs small-diameter hoses and requires professionals for the installation, significantly increasing the costs associated with acquiring the automatic device. Additionally, not all recreational vehicles are suitable for adaptation to the latter device.

In conclusion, currently an automatic machine is also known, commercialized by Camperclean^{™}, that empties and sanitizes the cassette. This machine is an external apparatus to the camper, comparable in size to a vending machine, and can be installed at hospitality facilities.

Naturally, this machine also entails considerable purchase, installation, and maintenance costs. Furthermore, it is dedicated exclusively to hospitality facilities such as rest areas, campgrounds, or similar venues and in any case cannot be conveniently transported.

In this context, the technical task underlying the present invention is to design a device for flushing cassettes that substantially overcomes at least some of the mentioned drawbacks.

As part of this technical task, an important object of the invention is to achieve a device for flushing cassettes that enables hygienic cleaning of a cassette of a cassette toilet in a recreational vehicle.

Another important object of the invention is to provide a device for flushing cassettes that allows for rapid and simple cleaning.

Additionally, a further object of the invention is to obtain a device for flushing cassettes capable of performing complete and efficient cleaning of the entire cassette, including all its parts.

Moreover, a further object of the invention is to develop a device for flushing cassettes that is suitable for use with commercially available cassettes, particularly avoiding modifications to them or the use of external means for cleaning.

Finally, a further object of the invention is to provide a device for flushing cassettes that is structurally simple, and thus economical, enabling production and diffusion on the market in a favourable manner for users.

The technical task and specified objects are achieved by a device for flushing cassettes as claimed in the accompanying claim 1.

Preferred technical solutions are highlighted in the dependent claims.

The features and advantages of the invention are further clarified in the detailed description of preferred embodiments of the invention, with reference to the attached drawings, wherein:

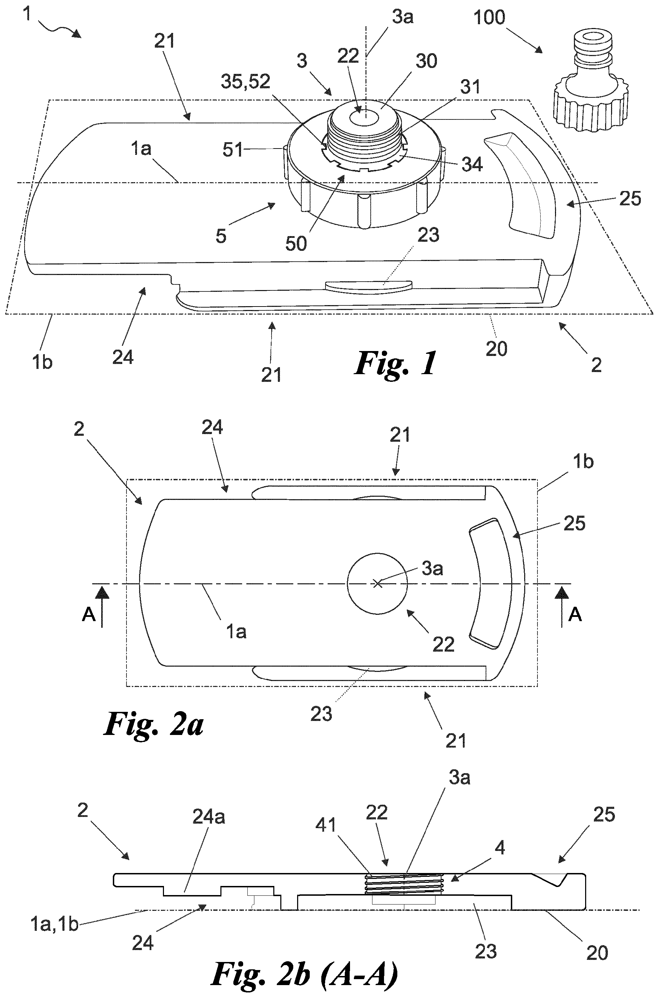

**Fig. 1** depicts a perspective view of a cassette flushing device according to the invention;
**Fig. 2a** shows a top view of the first body of a cassette flushing device according to the invention;
**Fig. 2b** is a sectional view (A-A) of the first body of Fig. 2a;

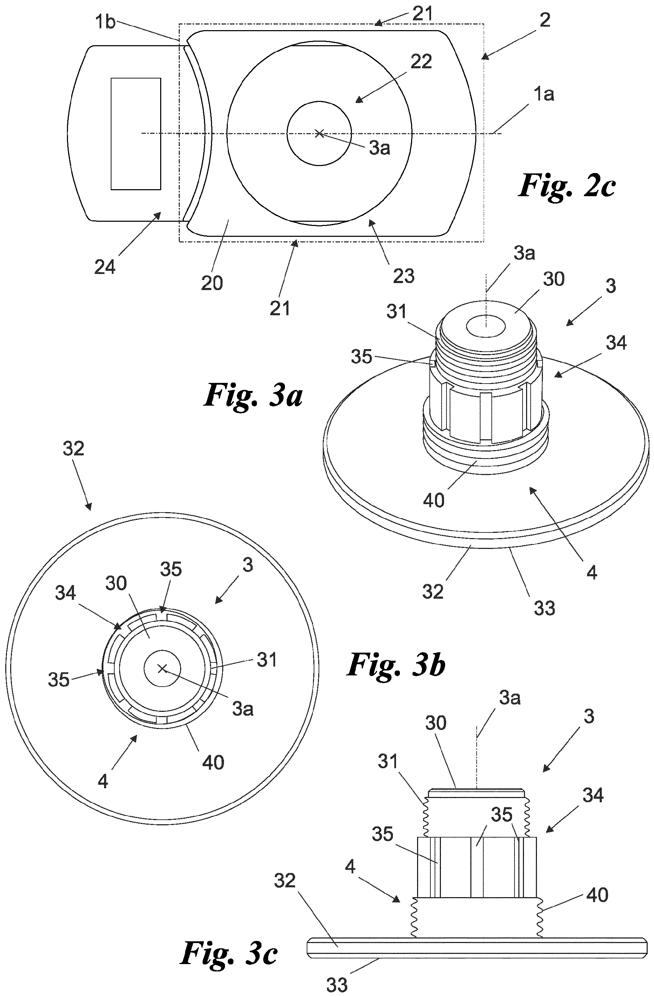

**Fig. 2c** represents a bottom view of the first body of Figs. 2a-2b;
**Fig. 3a** illustrates a perspective view of the second body of a cassette flushing device according to the invention;
**Fig. 3b** shows a top view of the second body of Fig. 3a;
**Fig. 3c** represents a side view of the second body of Figs. 3a-3b;

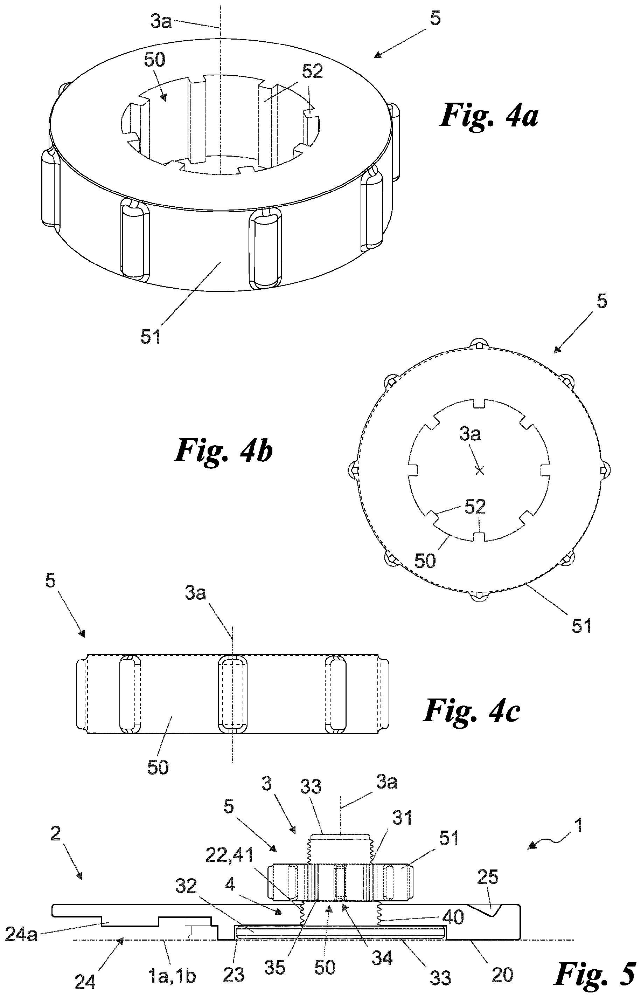

**Fig. 4a** illustrates a perspective view of the third body of a cassette flushing device according to the invention;
**Fig. 4b** shows a top view of the third body of Fig. 4a;
**Fig. 4c** represents a side view of the third body of Figs. 4a-4b;
**Fig. 5** depicts a longitudinal sectional view of an assembled cassette flushing device according to the invention;
**Fig. 6** illustrates the insertion step and the start of the movement step of a cassette cleaning process using a cassette flushing device according to the invention, where the device is inserted between the cassette slides so as to push the lid away from the slides and align the hole with the opening for device activation;
**Fig. 7** illustrates the end of the movement step of a cassette cleaning process performed with a cassette flushing device according to the invention, wherein the device is in use;
**Fig. 8** represents the translation step of a cassette cleaning process performed with a cassette flushing device according to the invention, wherein the duct is rotated with respect to the hole to lower the flange, and consequently the second interface surface, onto the wall and seal the device to the wall;
**Fig. 9** shows the connection step of a cassette cleaning process performed with a cassette flushing device according to the invention, wherein the coupling is connected to an external hydraulic network via a common hose, and the cassette discharge duct is opened to enable the draining of the cassette after washing;
**Fig. 10** illustrates the unlocking step of a cassette cleaning process performed with a cassette flushing device according to the invention, wherein the flange is moved away from the wall to release the device;
**Fig. 11** illustrates the removal step of a cassette cleaning process performed with a cassette flushing device according to the invention, wherein the device is removed from the slides, and the lid is pulled back by the tooth placed in the slot;
**Fig. 12** shows an exploded view of a further embodiment of a cassette flushing device according to the invention in a further embodiment wherein the connection means also include a part of the second body and the third body;
**Fig. 13a** shows a longitudinal sectional view of a cassette flushing device according to the invention in a further embodiment during an assembly step, wherein the second body is divided into a first component, including the flange and the duct, and a second body including the first coupling portion, with the third body is placed around the second component;
**Fig. 13b** represents a longitudinal partial sectional view of the device of Fig. 13a, wherein it is obvious that the third body keeps the additional protuberances in a deformed condition during assembly;
**Fig. 13c** shows a longitudinal partial sectional view of the device of Figs. 13a-13b, wherein the third body, coupled to the second component, and the additional protuberances are housed in the recesses of the third body, transitioning to the undeformed condition;

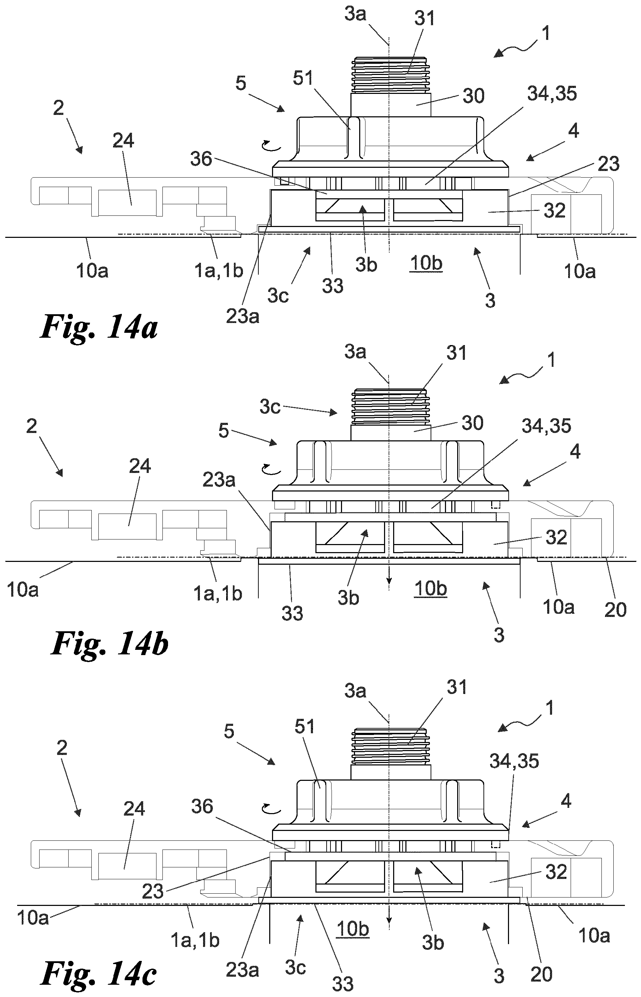

**Fig. 14a** illustrates a longitudinal partial sectional view of a cassette flushing device according to the invention in a further assembled embodiment, wherein the flange is still in the retracted condition, preceding the alignment condition;
**Fig. 14b** shows a longitudinal partial sectional view of the device of Fig. 14a, wherein the flange is still in a closure condition, entirely housed within the cassette opening thus occluding it;
**Fig. 14c** represents a longitudinal partial sectional view of the device of Fig. 14a, wherein the flange is still in a closure condition, in contact with the walls of the cassette to occlude the opening of the cassette;
**Fig. 15** depicts a perspective view of a cassette flushing device according to the invention in a further embodiment wherein the device is in use on a Thetford^{™}-type cassette;
**Fig. 16** illustrates a perspective view of a cassette flushing device according to the invention in a further embodiment wherein the device is in use on a Dometic^{™}-type cassette;
**Fig. 17** is a perspective view of a cassette flushing device according to the invention in a further embodiment wherein the device is in use on a Thetford^{™} Porta Potti cassette, and the coupling means are partially counter-shaped to the wall of the cassette;
**Fig. 18** represents a perspective view of a cassette flushing device according to the invention in a further embodiment wherein the device is in use on a Thetford^{™} Porta Potti cassette, and the coupling means include a bayonet ring (not visible) developed around the housing on the first body.

In the present document, measurements, values, shapes, and geometric references (such as perpendicularity and parallelism) associated with terms like "approximately" or similar terms such as "substantially" are to be understood as allowing for measurement errors or inaccuracies due to production and/or manufacturing errors, and especially for slight deviations from the stated value, measurement, shape, or geometric reference. For example, such terms, when associated with a value, preferably indicate a deviation not exceeding 10% of the value itself.

Furthermore, when terms such as "first", "second", "upper", "lower", "main", and "secondary" are used, they do not necessarily identify an order, a priority of relationship, or relative position, but may simply be used to distinguish different components more clearly one from the other.

Unless otherwise specified, as evident from the following discussions, terms such as "processing", "computing", "determination", "computation", or similar refer to the action and/or processes of a computer or similar electronic computation device that manipulates and/or transforms data represented as physical quantities, such as electronic magnitudes of records of a computing system and/or memories, into other data similarly represented as physical quantities within computer systems, records, or other information storage, transmission, or display devices.

Unless otherwise indicated, the measurements and data reported in this text are to be considered as performed in International Standard Atmosphere ICAO (ISO 2533:1975). Referring to the figures, the cassette flushing device according to the invention is globally denoted by reference number **1.**

The device 1 is designed to be used on a cassette **10.**

The cassette 10 is a cassette for cassette toilets, for instance, in a recreational vehicle such as a camper, caravan, or other vehicle, permanently fitted or otherwise, that allows occupants to reside within.

The cassette 10 is itself well-known and can, for example, be similar or even identical to a cassette currently commercialized by Thetford^{™}.

In any case, the cassette 10 includes at least walls 10a. The walls 10a delimit the cassette 10, thus forming the barriers of the containment tank of the cassette 10.

The cassette 10 further includes at least one opening **10b.**

The opening 10b is generally adapted to be positioned below the discharge hole of a cassette toilet and, therefore, is designed to allow objects, primarily human organic solid and/or liquid waste, to enter the collection tank of the cassette 10 by gravity.

Preferably, the opening 10b is therefore located in the upper area (i.e., at a higher gravitational potential) of the cassette 10.

Additionally, the wall 10a surrounding the opening 10b may include an annular gasket encircling the opening 10b.

Additionally, the opening 10b may also include a shutter, adapted to be manually opened or closed using a knob positioned on the cassette 10. This shutter is commonly used in conventional cassettes and often includes an opening mechanism whereby, in the closed position, the shutter abuts against the gasket and, to be opened, the shutter is moved away, particularly lowered, with respect to the gasket of the wall 10a, and then moved away from the opening 10b.

Furthermore, the cassette 10 may also include at least two slides **10c.**

The slides 10c are essentially two guiding sections extending parallel to one another. These slides 10c are moreover positioned side by side to the opening 10b. More specifically, the slides 10c are located at opposite sides of the opening 10b on the wall 10a.

Therefore, the cassette 10 may include, if it is a conventional cassette, a lid **11.** The lid 11 is capable of sliding between the slides 10c be able to occlude or release on command the opening 10b, i.e. when the user intervene.

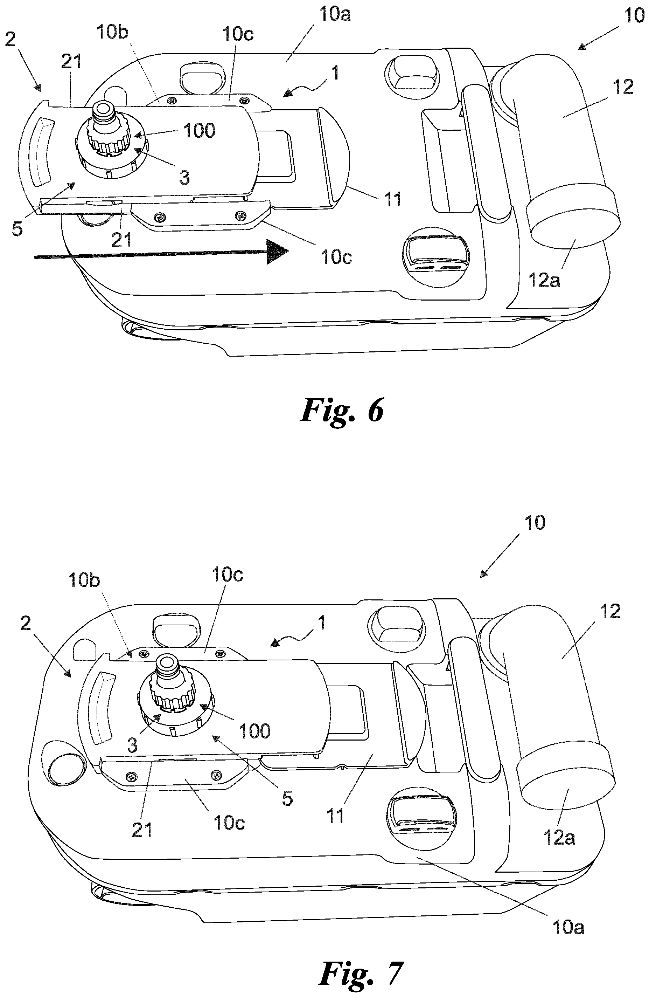

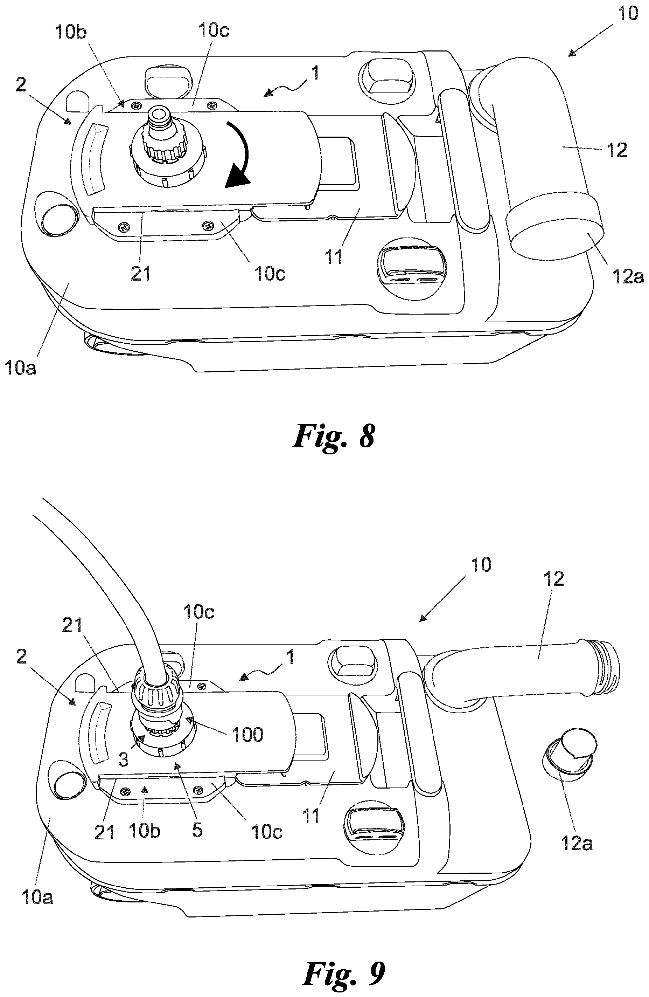

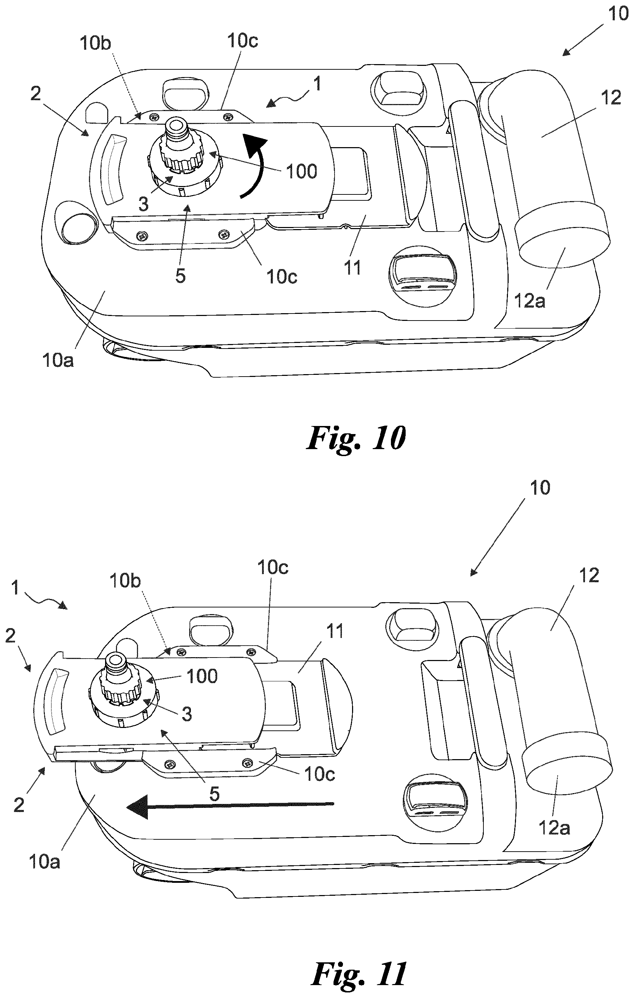

Therefore, the slides 10c can be manufactured in various ways, depending on the type of cassette 10 whereon the device 1 is intended to be installed. Actually, for instance, in a *Thetford*^{™} cassette as shown in Figs. 6-11 and 15, the slides 10c may be defined by two channels within which a part of the device 1 can slide.

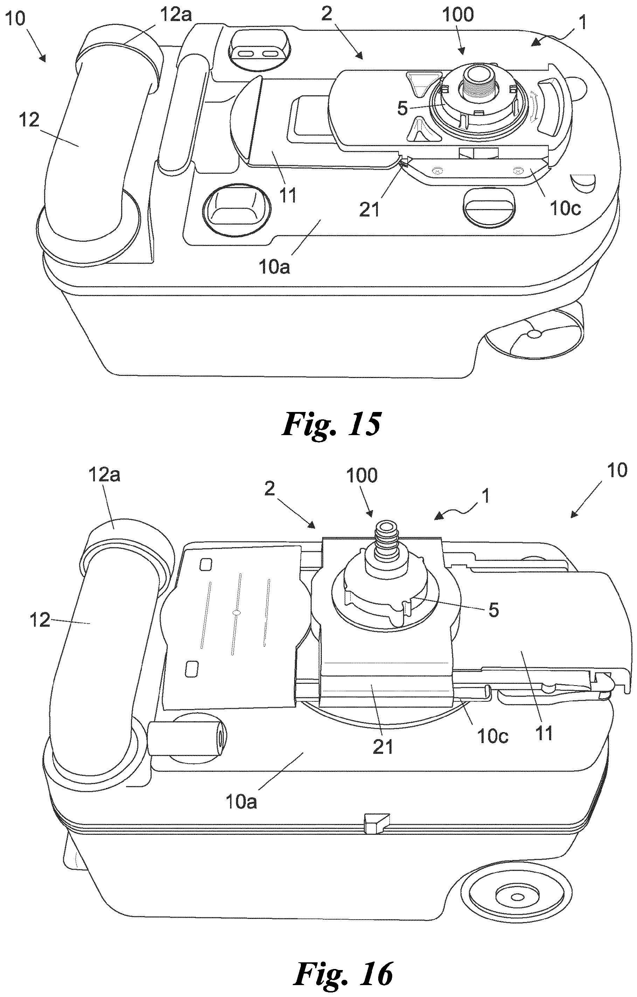

Alternatively, in a typical configuration of a *Dometic*^{™} cassette as depicted in Fig. 16, the slides 10c might be defined by two lateral telescopic arms to which the lid 11 is normally constrained.

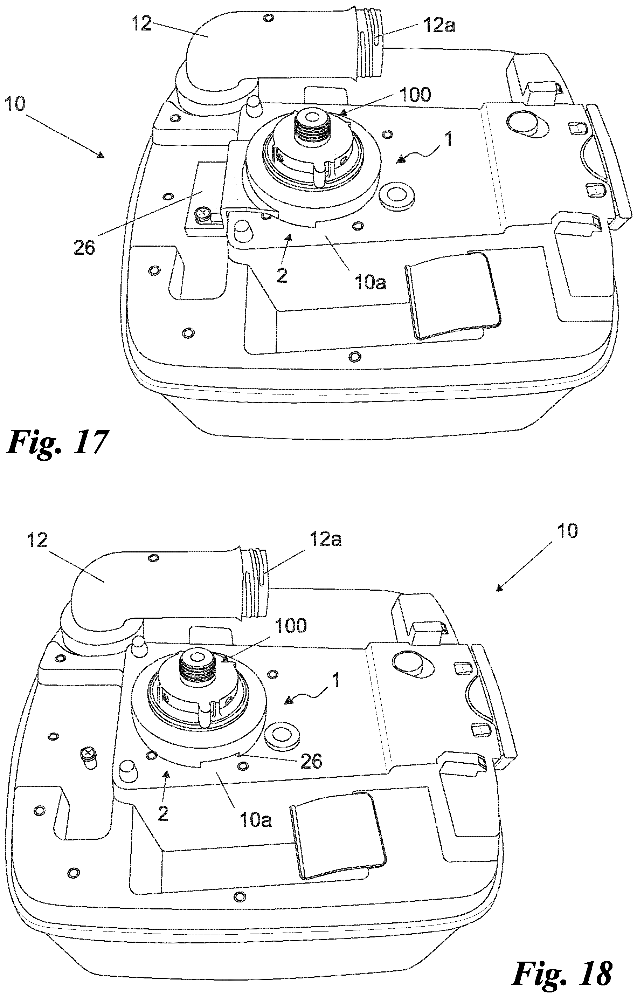

It should be noted that in some models of portable cassette 10, such as the commercially branded Thetford^{™} Porta Potti shown in Figs. 17-18, the slides 10c may be absent altogether.

In such cases, the lid 11 and, consequently, the device 1, may be constrained to the cassette 10 in other ways, as explained further below.

Generally, the lid 11 may consist of a flat plate or be shaped to define recesses or protrusions on its exposed surface.

The cassette 10 also includes a discharge duct **12.**

The discharge duct 12 is a tubular element positioned at one end portion of the cassette 10. It is commonly rotatable and allows the discharge of objects or liquids contained within the cassette 10.

Moreover, when the discharge duct 12 is not in use, it is preferably sealed. Therefore, it also includes a discharge cap **12a.**

The discharge cap 12a is, of course, removable from the discharge duct 12.

For example, the discharge cap 12a may be removed or attached to the discharge duct 12 by means of reciprocal rotation.

In any case, preferably, the cassette 10 according to the invention also includes the device 1.

The device 1 is designed to allow facilitated flushing of the cassette 10.

To this end, in general terms, the device 1 comprises at least a first body **2.**

The first body 2 is essentially a physical object, preferably provided at the opening 10b to be able to occlude it.

For example, the first body 2 may include a plate, i.e., a thin element. Moreover, it may have shapes and dimensions similar to the lid 11, thus ensuring compatibility, if present, with the slides 10c or with other connection systems between the lid 11 and the cassette 10 in conventional cassettes 10.

The first body 2 preferably develops along a main axis **1a.**

The main axis 1a is a virtual axis along which the first body 2 develops. It can coincide with the predominant development axis and possibly also with the centroidal axis of the very first body 2 and/or of the device 1 itself.

Since the body 2 essentially overlaps the opening 10b, it can also have compact or circular shapes. In this case, the main axis 1a may simply be an axis along which the body 2 is at least partially developed, for instance, along which it defines one of its dimensions, such as a width or a diameter. Indeed, if the body 2 is predominantly disc-shaped, the main axis 1a can be defined as the direction along which at least one diameter develops.

The first body 2 therefore includes an interface surface **20.**

The interface surface 20 is designed to come into contact with at least part of a wall 10a of the cassette 10. Furthermore, the interface surface 20 is preferably designed, when placed in contact with the wall 10a, to occlude the opening 10b as explained in more detail below.

Therefore, to this end, the interface surface 20 preferably develops along a main plane **1b.**

The main plane 1b is preferably aligned with the main axis 1a. Thus, the main plane 1b is preferably a virtual plane. Consequently, the interface surface 20 is preferably flat. However, it could also be curved, for example, if the wall 10a is also curved. Preferably, therefore, the interface surface 20 is at least shaped like the wall 10a and is counter-profiled to it.

The first body 2 may also include, in at least one embodiment, at least also two edges **21.** The edges 21, if present, are located at end zones of the first body 2. Specifically, the edges 21 preferably develop specularly to the main axis 1a. Additionally, the edges 21 extend parallel to the main axis 1a.

Each of the edges 21 is advantageously designed to engage and thus slide within a respective slide 10c of the cassette 10.

The first body 2 further includes at least one additional component.

Specifically, the first body 2 includes at least one hole **22.**

The hole 22 is a through hole, transversely to the main plane 1b. Consequently, the hole 22 is advantageously designed to establish fluid passage communication between the opening 10b and the outside, at least when the device 1 is in use. When the device 1 is used on a cassette 10, the hole 22 is positioned over the opening 10b.

To facilitate cleaning of the cassette 10 through the hole 22, the device 1 further and preferably includes at least one fitting **31.**

The hydraulic coupling 31 is a hydraulic-type connector. Additionally, the coupling 31 is at least in fluid passage communication with the hole 22. Therefore, the coupling 31 is designed to enable hydraulic connection of the device 1 with an external hydraulic network connector **100.** Even more specifically, the coupling 31 is configured to allow the stable hydraulic connection of the device 1 with an external hydraulic network connector 100. This means that the coupling 31 advantageously includes components that enable stable attachment of a hydraulic network connector 100.

The connection between the coupling 31 and the hydraulic network connector 100 is therefore made to allow the introduction of a pressurized cleaning liquid into the cassette 10. The cleaning liquid may consist of, or essentially include, water. It may also include water mixed with other additives.

To this end, in more detail, the hydraulic network connector 100 could be a male hydraulic network terminal onto which a female terminal can be attached, and the coupling 31 could include a simple thread for screwing the hydraulic network connector 100. Alternatively, the coupling 31 could itself include a male or female connector ready for connection to an external hydraulic network, such as via a common hose or another suitable tubular element for liquid conveyance.

Alternatively, the coupling 31 might also correspond to the hole 22 or an adjacent narrowing to allow insertion of hoses or other tubular elements.

In its simplest embodiment, the device 1 may be of this type.

Alternatively, the device 1 may include additional components.

For example, the device 1 may include a second body **3.**

If present, the second body 3 is coupled with the first body 2.

Additionally, it predominantly extends along a secondary axis **3a.**

The secondary axis 3a is preferably transverse to the main plane 1b, for example perpendicular to it.

Thus, the second body 3 includes a duct **30.**

The duct 30 is essentially a tubular element, i.e., a hollow element with a cavity running through it from one end to the other. Preferably, the duct 30 is centered with respect to the secondary axis 3a.

Therefore, to facilitate the coupling between the bodies 2 and 3, the duct 30 is inserted into the hole 22 in such a way as to mutually constrain the bodies 2 and 3. Specifically, the constraint created by the interaction between the duct 30 and the hole 22 provides at least an impediment to the relative translation of the bodies 2 and 3 along the main plane 1b.

If present, the second body 3 preferably also includes the coupling 31.

In detail, the coupling 31 is integral with the duct 30. Furthermore, the coupling 31 is positioned at one end of the duct 30, facing a side of the first body 2 opposite to the first interface surface 20.

As previously mentioned, in this case as well, the coupling 31 may correspond to a thread formed around the end of the duct 30.

Regardless of the presence of the coupling 31, to further connect the bodies 2 and 3, in addition to what has been described, the device 1 may also include connection means **4.** If present, the connection means 4 preferably connect the bodies 2 and 3 along the secondary axis 3a, as further specified below.

Such connection means 4 may, for example, be implemented as a simple snap-fit.

Alternatively, the connection means 4 may, for instance, be configured to allow the translation of the duct 30 with respect to the hole 22 along the secondary axis 3a proportionally to relative movements between the bodies 2, 3 or parts thereof, caused by the rotation of the duct 30 with respect to the hole 22 around the secondary axis 3a, or by the rotation of other components, as further described below. Thus, in general, the translation of the duct 30 with respect to the hole 22 along the secondary axis 3a is preferably achieved proportionally to the rotation of at least part of the second body 3 with respect to the hole 22 around the secondary axis 3a.

This means that if the second body 3 is not moved, at least in part, for example rotated, the relative translation between the bodies 2 and 3 is null, and they remain mutually constrained even along the secondary axis 3a.

In a preferred, but not exclusive, embodiment, the connection means 4 include at least a first thread **40** and a second thread **41.**

The first thread 40 preferably extends around the secondary axis 3a externally to the duct 30.

The second thread 41 preferably extends around the secondary axis 3a internally to the hole 22. Therefore, the second thread 41 is configured to couple with the first thread 40 and is preferably counter-profiled to it.

The aforementioned connection means 4 are particularly useful in an embodiment of the device 1, as described below.

Actually, in a preferred embodiment, the connection means 4 loosely constrain the bodies 2 and 3 in such a way as to define a plurality of different stable positions of the duct 30 with respect to the hole 22. Achieving this configuration, i.e., these stable positions, is possible with the previously described threads 40 and 41 but can also be achieved with other connection means 4, such as pressure means, elastic means, or levers, allowing the determination of the various stable positions of the duct 30 with respect to the hole 22.

In the preferred, but not exclusive, embodiment, the first body 2 includes a housing **23.** The housing 23 is essentially a cavity, i.e., an empty space, formed on the first body 2.

Specifically, the housing 23 is preferably carved out of the first interface surface 20. Additionally, the housing 23 surrounds the hole 22 at the main plane 1b. This means that, when the device 1 is in use, the housing 23 is interposed between the hole 22 and the opening 10b and substantially reciprocally connects the hole 22 and the opening 10b. Furthermore, the housing 23 is preferably sufficiently large to encircle the opening 10b, facing at least all or most of the wall 10a surrounding the opening 10b.

Thus, the second body 3 preferably includes a flange **32.**

The flange 32 is essentially a disk-shaped element or otherwise has a larger section on the main plane 1b than the duct 30.

Additionally, the flange 32 is integral with the duct 30. Therefore, the flange 32 is located at one end of the duct 30, opposite to the coupling 31. Specifically, the flange 32 is preferably housed in the housing 23.

To this end, the flange 32 defines dimensions that are compatible and preferably close to the housing 23.

Moreover, advantageously, the flange 32 includes a second interface surface **33.**

The second interface surface 33 is parallel to the first interface surface 20. Thus, the second interface surface 33 is configured to face the opening 10b and the surrounding portions of the wall 10a.

Consequently, the second interface surface 33, in relation to the stable positions assumed by the duct 30 with respect to the hole 22, defines at least one alignment condition and one closure condition.

In the alignment condition, preferably, the interface surfaces 20 and 33 are aligned with each other.

In the closure condition, the interface surfaces 20 and 33 are offset from each other. Moreover, in particular, the flange 32 advantageously protrudes from the housing 23 along the secondary axis 3a in such a way that, when the device 1 is in use, the flange 32 exerts a closing pressure onto a portion of the wall 10a surrounding the opening 10b or enters, surrounded by the walls 10a, into the opening 10b to occupy and occlude it. In this way, the flange 32 acts as a plug, sealing the opening 10b and sealing the cassette 10.

To improve sealing, the flange 32 may include a gasket. This gasket can be formed by a membrane entirely or partially covering the second interface surface.

For example, the flange 32 may include an O-ring.

Alternatively, as in common cassettes, the wall 10a of the cassette 10 may include an annular gasket placed around the opening 10b. Therefore, the flange 32 may be configured to interact with the gasket of the wall 10a, optionally resting and pressing the second interface surface 33 against the gasket of the wall 10a.

Alternatively, the flange 32 may also include a projecting portion, such as a gasket smaller in size than the rest of the flange along the main plane 1b, configured to be inserted into the opening 10b while the rest of the flange 32 contacts the walls 10a of the cassette 10.

If the connection means 4 include threads 40 and 41, the first thread 40 is preferably located externally to the duct 30 near the flange 32.

To improve the device 1 usability, additional components may be present.

For instance, the second body 3 may include a first coupling portion **34.**

If present, the first coupling portion 34 is located externally to the duct 30, adjacent to the coupling 31. Consequently, the coupling portion 34 allows the user to grip and rotate the second body 3 around the secondary axis 3a.

The first coupling portion 34 may then include a gripping surface, such as a porous surface, designed to generate friction when grasped. Alternatively, it may be designed to interact with an additional component.

Indeed, the device 1 may further include a third body **5.**

If present, the third body 5 is tubular, for example, annular. The term "tubular" is intended to define a closed profile, without specifying a particular shape, around a central through-hole. Moreover, the third body 5 develops around the secondary axis 3a, thus, the third body 5 is distinct and separate from the second body 3.

More specifically, the third body 5 preferably includes a second coupling portion **50.**

The second coupling portion 50 preferably rigidly constrain the third body 5 to the second body 3, between the coupling 31 and the first body 2.

Thus, in this regard, the second coupling portion 50 preferably interacts with the first coupling portion 34.

Specifically, one of the coupling portions 34 and 50 includes one or more grooves **35. If** present, the grooves 35 extend parallel to the secondary axis 3a.

Additionally, the other of the coupling portions 34 and 50 includes one or more protuberances **52.** The protuberances 52 also preferably extend parallel to the secondary axis 3a. Furthermore, each of the protuberances 52 can couple with a corresponding groove 35, allowing sliding with respect to the groove 35 exclusively along the secondary axis 3a.

This means that, when the third body 5 rotates around the secondary axis 3a, it solidly drags the second body 3 into rotation, but the latter is free to translate while rotating along the secondary axis 3a, thus raising or lowering the flange 32 along the secondary axis 3a. To facilitate handling, the third body 5 may also include a grip portion **51.**

The grip portion 51 extends externally from the third body 5. Consequently, it allows the user to grip and rotate the third body 5 around the secondary axis 3a.

In this regard, similar to the first coupling portion 34, the grip portion 51 could include a rough or porous surface or protrusions to increase friction.

As previously mentioned, the device 1 can be employed in a cassette 10 for WC systems, thereby defining a further invention.

In particular, the cassette 10 may include the device 1, as previously described, with the edges 21 each inserted into a respective slide 10c. In this configuration, the device 1 thus occludes the opening 10b so that the cassette 10 is internally accessible at the opening only through the coupling 31.

Furthermore, the device 1 can replace the conventional lid 11 and therefore, the cassette 10 may not include a lid 11.

Alternatively, the cassette 10 may still include the lid 11, which can interact with the device 1.

In this regard, preferably, the device 1 may include a slot **24.**

In this regard, preferably, the device 1 may include a slot 24.

If present, the slot 24 is formed on the interface surface 20 at one end of the first body 2. Consequently, the slot 24 is preferably designed to accommodate an end of the lid 11 in such a way as to retain at least part of the lid 11 when the device 1 is inserted between the slides 10c. The insertion of the device 1 between the slides 10c results in the application of a push to the lid 11 parallel to the primary axis 1a, displacing the lid out of the slides 10c so that the device 1 replaces the lid 11 over the opening 10b, defining use condition.

To enhance the grip between the device 1 and the lid 11, the slot 24 may also include a tooth **24a.**

If present, the tooth 24a extends transversely to the main plane 1b so as to form a sort of hook with the portion of the first body 2 delimiting the slot 24. This hook is designed to interfere with possible recesses or protrusions present on the lid 11. Therefore, thanks to the tooth 24a, the lid 11 can be dragged by the device 1 in both directions along the main axis 1a.

The second body 3 can be made in a single piece or divided into multiple parts.

In fact, in an additional embodiment of the device 1, the second body 3 can be divided into several components, and the connection means 4 may include a component of the second body 3, as explained below.

Indeed, the second body 3 may include a first component **3c** and a second component **3b.**

The first and second components 3c, 3b are preferably configured to interconnect in such a way as to form the second body 3 while also defining part of the connection means 4. Specifically, the first component 3c preferably includes, or is constituted by, the duct 30 and the flange 32. The first component 3c may also include the fitting 31 if present.

The first component 3c, particularly the duct 30, therefore includes the first thread 40, which preferably extends around the secondary axis 3a externally to the duct 30.

Unlike the previously described embodiment, the second thread 41 does not extend on the hole 22 but rather internally to the second component 3b.

This latter component is actually designed to couple with the first component 3c by means of the threads 40, 41.

Consequently, by virtue of the threads 40, 41, the first component 3c is preferably loosely constrained to the second component 3b, so as to allow translation along the secondary axis 3a with respect to the second component 3b in proportion to a reciprocal rotation between the first and second components 3c, 3b.

The first component 3c is also configured to remain rotationally locked, while the second component 3b is preferably the part of the second body 3 that is rotatable around the secondary axis 3a.

Preferably, however the second component 3b is also constrained to the first body 2 in translation along the secondary axis 3a in at least one direction. Therefore, in this embodiment, the connection means 4 also include part of the second body 3 and specifically the second component 3b.

Specifically, the second component 3b is preferably housed, appropriately inserted, into the hole 22. Even more specifically, the second component 3b is preferably an annular structure surrounding the duct 30 and configured to be inserted along the secondary axis 3a into the hole 22.

The second component 3b may also be entirely blocked in translation with respect to the first body 2 within the hole 22 along the secondary axis 3a. Alternatively, preferably, it may be blocked in translation on only one side of the first body 2.

In this latter case, the second component 3b may include a shoulder **36.**

The shoulder 36 is essentially a ring extending radially from the secondary axis 3a from the second component 3b, so as to protrude radially from the second component 3b and to impede translation of the second component 3b in the hole 22 in at least one direction.

Since, in this case, the flange 32 is also preferably housed in the housing 23, the shoulder 36 is positioned at one end of the second component 3b, facing the flange 32. This way, the shoulder 36 prevents translation of the entire second body 2 with respect to the first body 2 in the same direction as that from the flange 32 to the opposite end of the duct 30. Naturally, as already anticipated, the second component 3b may also include additional elements configured to enable the mutual constraint of the second component 3b with respect to the first body 2.

For example, in a preferred embodiment, the second component 3b may include additional protrusions **37.** If present, the additional protrusions 37 are essentially parts of the second component 3b extending at an end of the second component 3b distal from the flange 32, i.e., preferably on the opposite side of the shoulder 36.

The additional protrusions 37 are advantageously deformable radially to the secondary axis 3a in such a way that their radial extension from the second component 3b can be altered through manual application of force, for instance, by a user.

Even more specifically, the additional protrusions 37 are elastically deformable and configured to allow a deformed condition wherein, when subjected to force, they approach the secondary axis 3a to reduce the radial extension of the second component 3b, and enable its insertion into the hole 22, and a non-deformed condition wherein, not subjected to force, they give the second component 3b an extension sufficient to obstruct translation along the secondary axis 3a of the second component with respect to the first body 2, particularly in the hole 22, in at least one direction.

If the second component 3b includes both the shoulder 36 and the additional protrusions 37, it can be completely blocked against translation with respect to the first body 2 in the hole 22 along the secondary axis 3a.

Therefore, the second component 3b can allow the user, when rotated, to define by means of the flange 32 the alignment and closure conditions between the interface surfaces 20 and 33, as previously described.

Indeed, the second component 3b preferably also includes the coupling portion 34. If present, this coupling portion is located externally to the second component 3b. Thus, the coupling portion 34 is designed to allow gripping and rotation of the second body 3, specifically the second component 3b, around the secondary axis 3a.

Additionally, the coupling portion 34 preferably extends around the secondary axis 3a starting from the shoulder 36. Consequently, the additional protrusions 37 may be distributed radially around the secondary axis 3a on the coupling portion 34. The additional protrusions 37 can thus be formed by parts of the coupling portion, such as ends of tongues extending parallel to the secondary axis 3a and flexible.

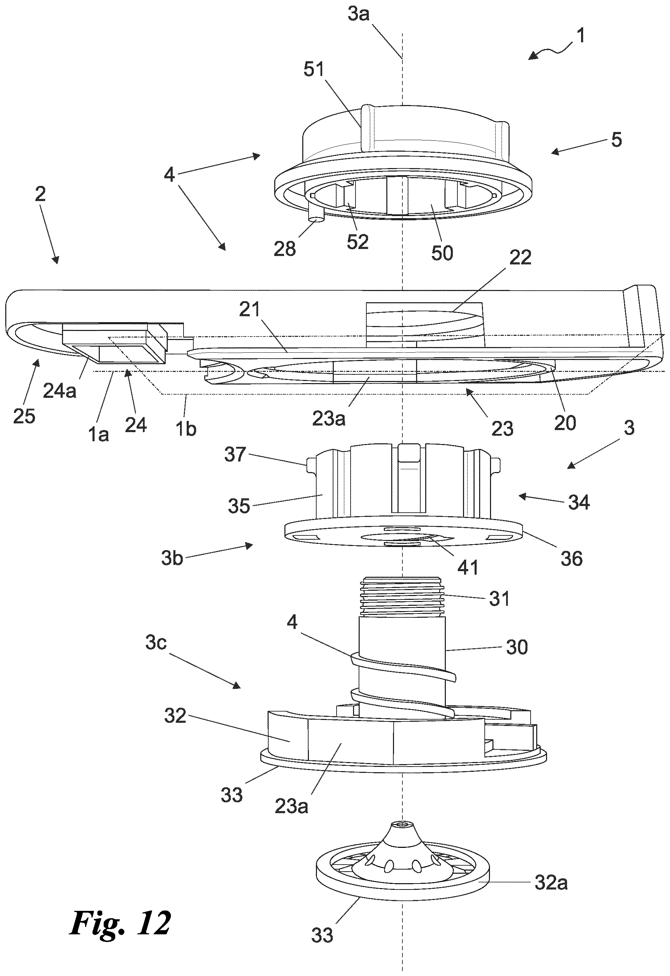

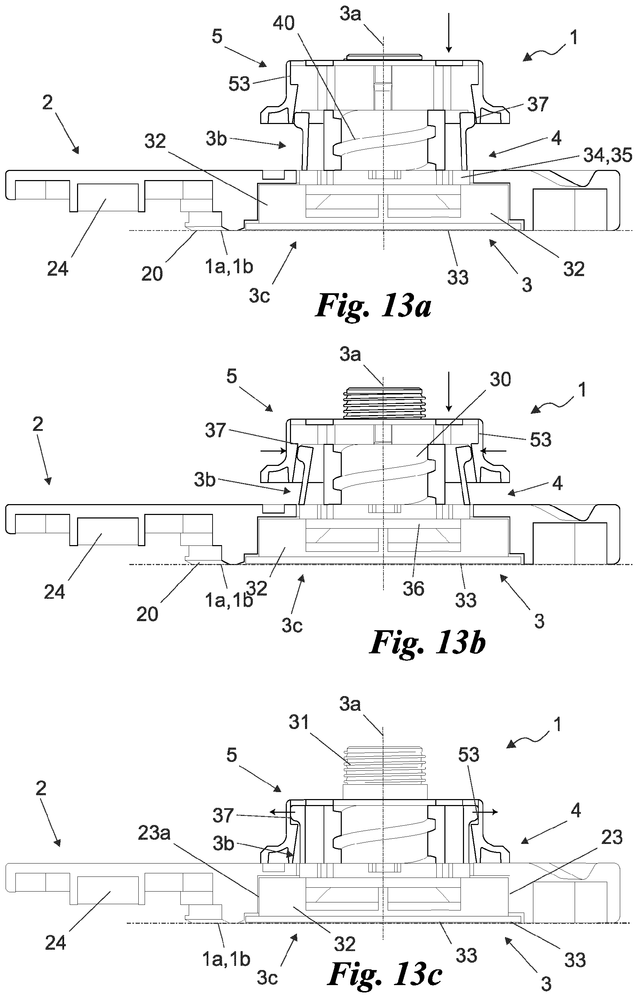

In this embodiment, and as shown in Figs. 12-13c, the third body 5 may also be present. If present, the third body 5 may have characteristics similar to those previously described. Therefore, the third body 5 can be essentially configured to couple with the second component 3b via the coupling portions 34 and 50 and, specifically, the protuberances 52. Alternatively, the third body 5 may be part of the connection means 4. In this sense, the third body 5 can be configured, when coupled with the second component 3b, to complete the translation blocking of the second component 3b with respect to the first body 2 along the secondary axis 3a. To this end, it is sufficient for the third body 5 to include recesses **53.** If present, these recesses are configured to each accommodate one of the said additional protrusions 37 so that, when the said third body 5 is placed around the second component 3b inserted into the hole 22 and translates along the secondary axis 3a with respect to the second component 3b, it maintains the additional protrusions in a deformed condition until reaching a stop on the first body 2. Upon reaching the stop, the additional protrusions 37 meet with the recesses 53, allowing them to transition from the deformed condition to the non-deformed condition, thereby establishing the translation constraint along the secondary axis 3a between the second component 3b and the first body 2. Thus, whether or not the third body 5 is present, in general, in this embodiment, the second component 3b is constrained to the first body 2 in such a way as to be blocked in translation along the secondary axis 3a with respect to it but free to rotate around the secondary axis 3a.

Conversely, preferably, the first component 3c is constrained only in rotation with respect to the first body 2 around the secondary axis 3a. To this end, the flange 32 and the housing 23 preferably include stops **23a.**

The stops 23a are essentially parts of the flange 32 and the housing 23 that interact to obstruct mutual rotation between the first body 2 and the first component 3c around the secondary axis 3a. They may include simple narrowings placed at the sides of the flange 32 with respect to the secondary axis 3a and shaped correspondingly to the geometry of the housing 23. Alternatively, the stops 23a may include elements distributed on the flange 32 and the housing 23, in particular around the flange 32, which interlock radially with respect to the secondary axis 3a to block rotation.

Thus, according to this embodiment, when the user rotates the second component 3b with respect to the first body 2, for example via the third body 5, around the secondary axis 3a, the first component 3c translates with respect to the second component 3b, and therefore with respect to the first body 2, along the secondary axis 3a due to the threads 40 and 41. Therefore, even in this embodiment, the connecting means 4 loosely constrain the bodies 2 and 3 in such a way as to determine a plurality of different stable positions of the duct 30 with respect to the hole 22. Achieving this configuration, that is, these stable positions, is possible with the previously described threads 40 and 41, but also, in this case, thanks to the constraint between the second component 3b and the first body 2.

Thus, even in this embodiment, the second interface surface 33 defines, in relation to the stable positions assumed by the duct 30 with respect to the hole 22, at least an alignment condition and a closure condition.

In the alignment condition, preferably, the interface surfaces 20 and 33 are mutually aligned.

In the closure condition, the interface surfaces 20 and 33 are mutually offset. Moreover, in particular, the flange 32 advantageously protrudes from the housing 23 along the secondary axis 3a in such a way that, when the device 1 is in use, the flange 32 exerts a sealing pressure over a portion of the wall 10a surrounding the opening 10b or, surrounded by the walls 10a, enters into the opening 10b to occupy and occlude it. In this way, the flange 32 acts as a plug, sealing the opening 10b and closing the cassette 10.

The operation of the flushing device 1 for cassettes, as previously described structurally, is substantially defined in the cleaning process of a cassette 10, as described below. Indeed, the invention includes a new cleaning process for a cassette 10.

The process includes, in broad terms, at least a positioning step.

During the positioning step, preferably, the device 1 is positioned on the cassette 10 in such a way as to completely occlude the opening 10b with the hole 22 facing the opening 10b.

This step can simply be performed by placing the device 1 at the opening 10b and constraining the device there.

Alternatively, in a preferred embodiment, additional steps may be performed during positioning, the latter are preferably sub-steps of the positioning steps.

Preferably, during positioning, the process also includes the steps of insertion and movement.

During the insertion step, preferably, each of the edges 21 is inserted into, or fitted onto, a respective slide 10c so that the device 1 can translate along the main axis 1a between the slides 10c. This step is especially relevant if the device 1 is used on a cassette of the *Thetford*^{™} type, as shown in Figs. 6-11 and 15, and *Dometic*^{™}*,* as shown in Fig. 16. During the movement step, preferably, the device 1 is moved along the main axis 1a, completely occluding the opening 10b with the hole 22 facing the opening 10b.

Moreover, advantageously, the process includes an additional connection step.

During the connection step, preferably, the coupling 31 is connected to an external water supply network to convey pressurized water into the cassette 10. For example, in this regard, the coupling 31 can be connected, as previously explained, to a hydraulic network connector 100.

If the device 1 is constructed according to the preferred embodiment, the process may also include a translation step.

The translation step is preferably performed after the movement step.

Thus, during the translation step, advantageously, the duct 30 is translated along the secondary axis 3a with respect to the hole 22 in such a way as to press the flange 32 against the wall 10a around the opening 10b, and to seal the cassette 10. The flange 32 may, as previously mentioned, be pressed against the gasket of the wall 10a, or include its own gasket, or enter into the opening 10b to occlude it.

Additionally, as already explained, the translation may be carried out by rotating at least part of the second body 3 around the secondary axis 3a with respect to the hole 22; in particular, the duct 30 around the secondary axis 3a with respect to the hole 22, or by rotating only the second component 3b if the second body 3 is in multiple parts.

If the cassette 10 is also equipped with a lid 11, the latter is initially, that is, before the insertion step, positioned on the cassette 10 between the slides 10c in such a way as to occlude the opening 10b.

Thus, the process may also include a placement step and a pushing step. These additional steps are particularly relevant if the device 1 is used on a cassette of the Thetford^{™} type, as shown in Figs. 6-11 and 15, and Dometic^{™}, as shown in Fig. 16. During the placement step, one end of the lid 11 is positioned within the slot 24. At this stage, optionally, the hook formed by the tooth 24a may capture a relief present on the lid 11.

Then, during the pushing step, the device pushes, during the insertion steps, the lid 11 away from the slides 10c along the main axis 1a.

Naturally, the process may include, at least after the connection step, a step of introducing a pressurized cleaning liquid into the cassette 10 via the coupling 31.

Moreover, the process may include a draining step, preferably performed by opening the discharge duct 12, removing the discharge cap 12a from it.

Additionally, the process may also include a detachment step, following the translation step, wherein the flange 32 is withdrawn from the wall 10a to free the device 1.

Thus, the process may also include a removal step, during which the device 1 is removed from the slides 10c. At this stage, if the device 1 includes the tooth 24a, the lid 11 is pulled back by the tooth 24a located in the slot 24 so as to maintain the opening 10b occluded.

If the device 1 is used on a *Thetford*^{™} *Porta Potti* cassette model, as shown in Figs. 17-18, the positioning step can be followed by a hooking step.

To this end, for example, the device 1 may include hooking means 26, integral with the first body 2, and configured to be constrained, at least, at one wall 10a of the cassette 10. Specifically, the device 1 may include counter-shaped parts to the cassette 10, as shown in Fig. 17, designed to be connected to it, for example, via screws, double-sided adhesive membranes, or other means.

In a very simplified embodiment, the first body 2 could include the hooking means 26 positioned on the first interface surface 20 around the housing 23. Thus, the hooking means 26 could include an annular double-sided adhesive membrane configured to enable the temporary attachment of the first body 2 to the wall 10a. Alternatively, the hooking means 26 could also include a ring positioned around the housing 23 and comprising bayonet tabs for rotational locking with corresponding tabs located on the wall 10a around the opening 10b.

In any case, these are just some of the possible solutions applicable to the hooking means 26 by an expert in the art.

The cassette flushing device 1 according to the invention achieves significant advantages. Indeed, the cassette flushing device 1 allows for the hygienic cleaning of a cassette toilet for a recreational vehicle.

Additionally, the cassette flushing device 1 enables quick and easy cleaning.

Moreover, the cassette flushing device 1 is capable of ensuring thorough and efficient cleaning of the entire cassette 10, including all its parts.

Thus, the cassette flushing device 1 is suitable for use with commercially available cassettes, particularly avoiding the need for modifications to the cassettes or the use of additional external tools for cleaning.

In this regard, for example, the device 1 makes it possible to clean even the gasket of the wall 10a and the shutter of the opening 10b typically present on conventional cassettes and which are usually not efficiently cleanable. For instance, the shutter can typically only be lowered without being removed from the opening 10b to allow cleaning of the upper part.

In conclusion, the cassette flushing device 1 is structurally simple and therefore economical, facilitating its production and market distribution in a manner beneficial to users.

The invention is susceptible to variations within the scope of the inventive concept defined by the claims.

For example, to facilitate the movement of the device 1 along the main axis 1a when the edges 21 are inserted into the respective slides 10c, the device 1 may also include a recess **25.**

If present, the recess 25 is an indentation or cavity made on the side of the first body 2 opposite the first interface surface 20. Additionally, if the slot 24 is present, the recess 25 is also located at the end of the first body 2 opposite the end where the slot 24 is located. The recess 25 thus allows the user to handle the device 1 connected to the cassette 10, for example, by inserting fingers or other tools into the recess 25.

Moreover, to prevent excessive relative rotation between the bodies 2 and 3, the first body 2 may include a guide **27.**

If present, the guide 27 is preferably a groove developed on one side of the first body opposite the first interface surface 20, surrounding at least part of the hole 22. Thus, the guide 27 defines a limited stroke, preferably developed in an arc around the secondary axis 3a on the first body 2.

In turn, one of the second body 3, the second component 3b, if present, and the third body 5 may include a corresponding pin **28.**

The pin 28 is thus integral with the second body 3, or with a part of the second body 3, specifically the second component 3b, and optionally also with the third body 5.

The pin 28 protrudes parallel to the secondary axis 3a. Therefore, preferably, the pin 28 is configured to move within the guide 27 in such a way as to limit the relative rotation between the bodies 2 and 3 to the travel defined by the guide 27 itself. The flange 32 may further include a diffuser **32a.**

If present, the diffuser 32a may be simply configured to fragment the water jet arriving from the duct 30. For example, in this regard, the diffuser 32a may include a plurality of nozzles or slots distributed around the secondary axis 3a.

In this context, all details may be replaced with equivalent elements, and the materials, shapes, and dimensions may be any.

## Claims

1. Cassette Flushing Device (1) comprising:
- a first body (2) including:
- a first interface surface (20) extending along a main plane (1b) and adapted to contact at least one wall (10a) of a cassette (10) for cassette toilets to occlude an opening (10b) on said wall (10a),
- a through-hole (22) transverse to said main plane (1b) and adapted to establish fluid passage communication between said opening (10b) and the exterior when said device (1) is in use with said hole (22) overlapping said opening (10b);
and **characterized in that** it further comprises
- at least one hydraulic coupling (31) in fluid passage communication with said hole (22) and configured to enable stable hydraulic connection of said device (1) with a hydraulic network connector (100) external to said device (1).

2. Device (1) according to claim 1, further comprising:
- a second body (3) mainly developing along a secondary axis (3a) transverse to said main plane (1b) and including:
- a duct (30) centred with respect to said secondary axis (3a) and inserted within said hole (22) so as to mutually constrain said bodies (2, 3) to translation along said main plane (1b);
- said coupling (31) integral with said duct (30) and placed at one end of said duct (30) facing one side of said first body (2) opposite to said first interface surface (20); and
- connection means (4) mutually connecting said bodies (2, 3) along said secondary axis (3a).

3. Device (1) according to claim 2, wherein said connection means (4) loosely constraint said bodies (2, 3) to each other so as to determine a plurality of different stable positions of said duct (30) with respect to said hole (22); said first body (2) further comprising a housing (23) obtained on said first interface surface (20) and circumscribed to said hole (22) at said main plane (1b); and said second body (3) further comprising a flange (32) integral with said duct (30), placed at an end of said duct (30) opposite to said coupling (31), housed in said housing (23), including a second interface surface (33) parallel to said first interface surface (20) and defining, with respect to said stable positions assumed by said duct (30) with respect to said hole (22) at least
- an alignment condition wherein said interface surfaces (20, 33) are mutually aligned, and
- a sealing condition wherein said interface surfaces (20, 33) are reciprocally offset and said flange (32) protrudes from said housing (23) along said secondary axis (3a) in such a manner that, when said device (1) is in use, said flange (32) enters said opening (10b), obstructing it, or exerts a sealing pressure on a portion of said wall (10a) surrounding said opening (10b) so as to close said opening (10b) and seal said cassette (10).

4. Device (1) according to the preceding claim, wherein said flange (32) comprises a gasket.

5. Device (1) according to any one of claims 2-4, wherein said connecting means (4) are configured to allow translation of said duct (30) with respect to said hole (22) along said secondary axis (3a) proportionally to the rotation of at least part of said second body (3) with respect to said hole (22) around said secondary axis (3a) and said second body (3) is a one piece body or comprises a first component (3c) including at least said duct (30) and said flange (32), and a second component (3b) annularly surrounding said duct (30).

6. Device (1) according to the previous claim, wherein said connecting means (4) comprise at least a first thread (40) extending around said secondary axis (3a) externally to said duct (30) in proximity of said flange (32) and a second thread (41) adapted to mate with said first thread (40) and extending around said secondary axis (3a) internally to said hole (22) or internally to said second component (3b).

7. Device (1) according to any one of claims 5-6, wherein said second body (3) comprises a first coupling portion (34) located outside said duct (30) adjacent to said coupling (31) or externally to said second component (3b) and adapted to allow said second body (3) or said second component (3b) to be gripped and rotated around said secondary axis (3a).

8. Device (1) according to any of the previous claims, further comprising a tubular third body (5) extending around said secondary axis (3a), distinct and separated from said second body (3) and including
- a second coupling portion (50) integrally constraining said third body (5) to said second body (3) between said coupling (31) and said first body (2), and
- a grip portion (51) extending externally to said third body (5) and suitable for gripping and rotating said third body (5) around said secondary axis (3a).

9. Device (1) according to at least claims 7 and 8, wherein one of said coupling portions (34, 50) comprises one or more grooves (35) extending parallel to said secondary axis (3a) and the other of said coupling portions (34, 50) comprises one or more protuberances (52) extending parallel to said secondary axis (3a) and each coupleable with a respective said groove (35) in such a way that they can exclusively slide with respect to the respective said groove (35) along said secondary axis (3a).

10. Cassette (10) for cassette toilets, bounded by walls (10a) and including an opening (10b) and a device (1) according to any of the preceding claims, wherein said device (1) occludes said opening (10b) such that said cassette (10) is accessible internally at said opening (10b) exclusively through said coupling (31).

11. Cassette (10) according to the preceding claim, further comprising a pair of slides (10c) positioned at opposite sides of said opening (10b) on one of said walls (10a), and wherein said device (1) comprises at least two edges (21) extending secularly and parallel to a main axis (1a) aligned with said main plane (1b) and adapted to be inserted or fitted into a respective slide (10c) to slide with respect to a respective said slide (10c) of said cassette (10).

12. Cassette (10) according to the preceding claim, further comprising a lid (11) suitable for translate between said slides (10c) in such a way that said opening (10b) can be occluded or released on command, and said device (1) comprising a slot (24) formed on said interface surface (20) at one end of said first body (2) and suitable for housing one end of said lid (11) so as to retain at least part of said lid (11) when said device (1) is inserted between said slides (10c), pushes said lid (11) parallel to said main axis (1a) out of said slides (10c) and replaces said lid (11) on said opening (10b) defining a condition of use.

13. Process for cleaning a cassette (10) according to any of claims 10-12, **characterized by** comprising:
- positioning said device (1) on said cassette (10) such that said opening (10b) is completely occluded with said hole (22) facing said opening (10b); and
- connecting said connector (31) to an external hydraulic network to channel pressurized water into said cassette (10).

14. Cleaning method according to the preceding claim, implemented on a cassette (10) according to claim 11, comprising during said positioning:
- inserting said edges (21) into respective slides (11c) so that said device (1) can slide along said main axis (1a) between said slides (10c);
- moving said device (1) along said main axis (1a) such that said opening (10b) is completely occluded with said hole (22) facing said opening (10b).

15. Process according to o any of claims 13-14, carried out with said device (1) according to at least claim 3, further comprising, after said moving step, translating said duct (30) along said secondary axis (3a) with respect to said hole (22) in such a way as to push said flange (32) against said wall (10a) around said opening (10b) and sealing said cassette (10).

16. Process according to the preceding claim implemented by said device (1) according to at least claim 5, wherein said translation is achieved by rotating at least part of said second body (3) around said secondary axis (3a) with respect to said hole (22).

17. Process according to at least claim 14, implemented with said cassette (10) according to claim 12, wherein before said insertion step, said lid (11) occludes said opening (10b), and said method further comprises:
- positioning one end of said lid (11) into said housing (24); and
- pushing, during said insertion, said lid (11) out of said slides (10c) along said main axis (1a).
